# EUROPEAN PATENT SPECIFICATION

(11) **EP 0 607 857 B1**
(45) Date of publication and mention of the grant of the patent: **12.06.1996**
(21) Application number: 94100370.9
(22) Date of filing: 12.01.1994
(51) Int. Cl.: F16F 15/12, F16F 1/04, F16D 3/56

(54) **Flexible shaft coupling**
Elastische Wellenkupplung
Accouplement d'arbres flexible

(30) Priority: 14.01.1993 JP 5015/93
(43) Date of publication of application: 27.07.1994
(73) Proprietor: SHOYO ENGINEERING COMPANY LIMITED, Chuo-ku Tokyo (JP); KYUSHU HASEC CO., LTD., Noogata-shi, Fukuoka (JP)
(72) Inventor: Fukuda, Kazuichi, Fujisawa-shi, Kanagawa (JP)
(74) Representative: VOSSIUS & PARTNER

(56) References cited:
- BE-A- 644 754
- US-A- 2 899 809

## Description

This invention relates to a backlash-free flexible shaft coupling.

One type of elastic shaft coupling uses coil springs as its flexible member. In one variation of this type, the coil springs are disposed to change their shape at right angles to the axes thereof. Dispensing with spring seats, this type of flexible shaft coupling has a simple and small structure that results in smaller moment of invention.

US-A- 4 639 237 discloses an example of this type of flexible shaft coupling, according to the preamble of each of the claims 1, 10, 11, 12 and 13.

A flexible shaft coupling according to US-A-4 639 237 comprises a first and a second hub, each of which has a flange at one end of the cylindrical part thereof and is connected to a transmission shaft, a holder fixed to the flange of the second hub so that the cylindrical part of the first hub passes therethrough and the flange of the first hub is contained therein, and coil springs passed through spring holes provided along the circumference of the flange of the first hub. The first and second hubs are disposed so that the flanges thereof face each other across a space left therebetween. The coil springs are compressed between the flange of the second hub and the holder. Torque transmission between the first an second hubs is achieved through the coil springs. The coil springs accommodate shaft misalignments and absorb the shock load working on the transmission shaft by changing their deflection. In addition, the coupling is composed with the coil springs tight-fitted in the spring holes without backlash so as to rotate in angle with high accuracy.

In the conventional flexible shaft couplings of the type described above, however, the coil springs deflect perpendicularly to the spring axis between the flange of the first hub and each of the flange of the second hub and holder. As this deflection exerts a high stress in the coil springs, their deflection must be kept at a comparatively small amount. This type of the coupling, in turn, has resulted in limited accommodation of shaft misalignments, absorbtion of shock load and reduction of torsional-vibration. Therefore, the development of flexible shaft couplings that provide much greater accommodation of shaft misalignments, absorption of shock load and reduction of torsional-vibration without backlash has been awaited.

The object of this invention is to provide a flexible shaft coupling without backlash having excellent function in accommodation of shaft misalignments, absorption of shock load and reduction of torsional-vibration.

A flexible shaft coupling according to this invention is defined by the features of each of the claims 1, 10, 11, 12 and 13.

A space large enough for accommodation of shaft misalignments is left between the flange of the first hub and each of the second hub and the holder.

Torque is transmitted from the drive shaft through the first hub connected thereto, barrel-shaped coil springs tight-fitted in the spring holes in the flange of the first hub, the pins held between the flange of the second hub and the holder with the barrel-shaped coil springs tight-fitted thereover and the second hub, and then to the driven shaft connected to the second hub, or in reversed direction. The loaded side of the middle part of the barrel-shaped coil springs is compressed inwardly to an extent that varies with the amount of the torque transmitted. The barrel-shaped coil springs accommodate shaft misalignments by their deflection in axial, radial and angular direction. The deflection of the barrel-shaped coil springs and the friction between the adjoining coils thereof absorb the shock load and reduce the torsional-vibration exerted on the transmitting system.

Fig. 1 is a vertical cross-sectional view of a first preferred embodiment of the flexible shaft coupling according to this invention.

Fig. 2 is a partial cross-sectional view seen from the plane 2-2 in Fig. 1.

Fig. 3 is a vertical cross-sectional view of a second preferred embodiment of the flexible shaft coupling according to this invention.

Fig. 4 is a vertical cross-sectional view of a third preferred embodiment of the flexible shaft coupling according to this invention.

Fig. 5 illustrates the accommodating function of offset misalignment of the flexible shaft coupling according to this invention.

Fig. 6 illustrates the accommodating function of angular misalignment of the flexible shaft coupling according to this invention.

Fig. 7 illustrates the accommodating function of axial misalignment of the flexible shaft coupling according to this invention.

Fig. 8 illustrates a method for testing the load-deflection curve of the barrel-shaped coil springs.

Fig. 9 shows load-deflection curves obtained from one example of the tests on the barrel-shaped coil springs.

Fig. 10 shows schematically illustrating the absorption of shock load and the reduction of torsional-vibration.

Fig. 11 is a vertical cross-sectional view of a flexible shaft coupling of this invention in a vertical use.

Fig. 12 is a vertical cross-sectional view of a shaft coupling consisting of two flexible shaft couplings of this invention fixed together.

Fig. 13 is a vertical cross-sectional view of a shaft coupling consisting of two flexible shaft couplings of this invention fixed together with an intermediate shaft interposed therebetween.

Fig. 14 is a vertical cross-sectional view of a flexible shaft coupling of this invention incorporated in a V-belt pulley. Fig. 15 is a vertical cross-sectional view of a flexible shaft coupling of this invention incorporated in a sprocket.

Fig. 16 is a vertical cross-sectional view of a flexible shaft coupling of this invention incorporated in an air clutch, in the OFF-state of transmission.

Fig. 17 shows the air clutch of Fig. 16 in the ON-state of transmission.

Fig. 18 is a partial cross-sectional front view of a brake in which a flexible shaft coupling of this invention is incorporated.

Fig. 19 is a vertical cross-sectional view of the brake drum of the brake shown in Fig. 18.

Fig. 20 is a vertical cross-sectional view of a torque limiter in which a flexible shaft coupling of this invention is incorporated.

Fig. 21 is a vertical cross-sectional view of the annular cover of the torque limiter shown in Fig. 20.

Fig. 22 is a front view of the annular cover shown in Fig. 21.

Fig. 23 is a magnified cross-sectional view of a portion of the same torque limiter.

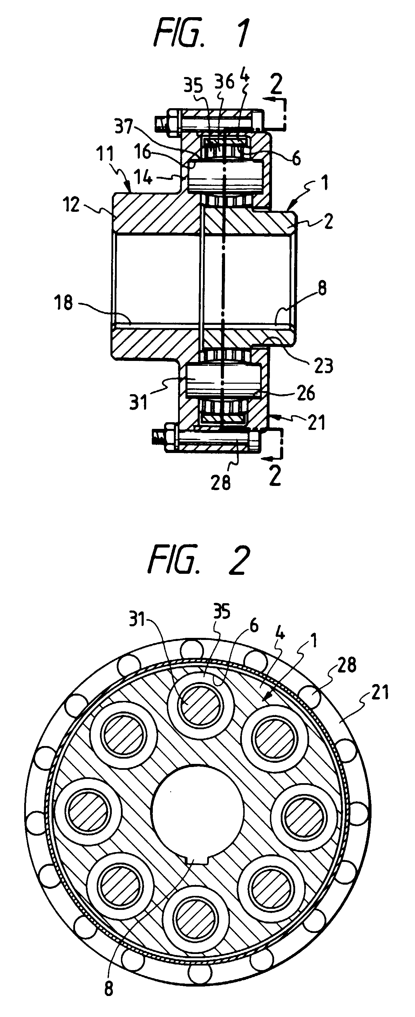

Figs. 1 and 2 show a first preferred embodiment of this invention.

A flexible shaft coupling consists essentially of a first hub 1, a second hub 11, a holder 21, pins 31 and barrel-shaped coil springs 35.

The first hub 1 has a flange 4 formed at one end of the cylindrical part 2 thereof, with eight spring holes 6 provided along the circumference of the flange 4. The cylindrical part 2 has a keyway 8 cut therein to hold a key by means of which the transmission shaft is connected to the first hub 1.

The second hub 11 has a flange 14 formed at one end of the cylindrical part 12 thereof that has a keyway 18 for connecting the transmission shaft. Pin holes 16 corresponding to the spring holes 6 in the flange 14 on the first hub 1 are provided in the end face of the flange 14.

The dish-shaped holder 21 has a hole 23 to pass through the cylindrical part 2 of the first hub 1 at the center thereof. The holder 21 also has pin holes 26 that face the pin holes 16 in the flange 14 on the second hub 11. The peripheral portion of the holder 21 and the flange 14 on the second hub 11 are fixed together with connecting bolts 28. The holder 21 holds therein the flange 4 on the first hub 1 that faces the flange 14 on the second hub 11 with a clearance left therebetween. A space large enough for accommodation of shaft misalignments is left between the holder fixed to the flange 14 on the second hub 11 and the flange 4 on the first hub 1 contained therein.

Eight pieces of pins 31 are inserted respectively in the pin holes 16 in the flange 14 on the second hub 11 and the pin holes 26 in the holder 21, both ends of each pin 31 being supported by the second hub 11 and holder 21.

Each barrel-shaped coil spring.35 passes through the spring hole 6 in the flange 4 on the first hub 1. While the largest-diameter portion 36 of the barrel-shaped coil spring 35 is shrink-fitted in the spring hole 6 in the first hub 1, the smallest-diameter portions 37 thereof are shrink-fitted over the pin 31. The barrel-shaped coil spring 35 is compressed between the second hub 11 and holder 21 to such an extent that the coil spring 35 deflects to bring the adjoining coils into contact with each other when torque is transmitted. For instance, the barrel-shaped coil springs are compressed between the second hub and holder by 5 to 15 % of free height of the spring. The number of the barrel-shaped coil springs per coupling varies with the amount of torque transmitted, ranging, for example, between four to sixteen. The barrel-shaped coil spring is either shrink- or expansion-fitted in the spring hole and over the pin. Therefore, the largest- and smallest-diameter portions of the barrel-shaped spring may be ground as required.

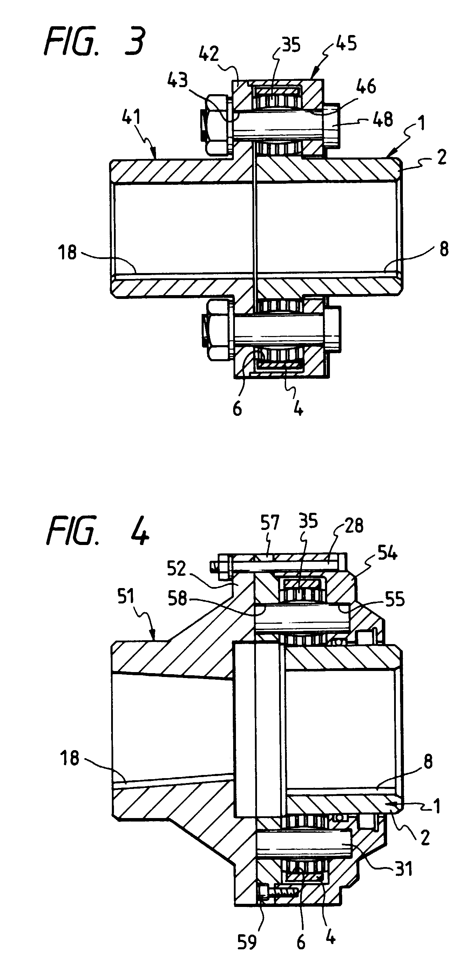

Fig. 3 shows a second embodiment of this invention. Parts and members of the following embodiments similar to those of the first embodiment are designated by similar reference characters, without duplicating the description thereof.

In the second embodiment, pin holes 43 and 46 are perforated through a flange 42 on a second hub 41 and a holder 45. The connecting bolts 48 serving as the pins as described in the first preferred embodiment fix the holder 45 to the flange 42 on the second hub 41 and hold barrel-shaped coil springs 35 in position. The connecting bolts 28 of the first preferred embodiment are unnecessary in the second preferred embodiment, therefore the size of the shaft coupling is smaller than that of the first preferred embodiment and also possible to reduce its moment of inertia.

Fig. 4 shows a third embodiment of this invention.

An intermediate ring 57 is inserted between a second hub 51 and a holder 54. Pin holes 58 perforated through the intermediate ring 57 are opposite to pin holes 55 in the holder 54. The intermediate ring 57 is fixed to the holder 54 with hexagonal socket-head bolts 59. The holder 54 and the intermediate ring 57 are integrally fixed to a flange 52 on the second hub 51 with connecting bolts 28.

When disassembling this shaft coupling, the holder 54 and the intermediate ring 57 can be integrally removed from the second hub 51. As there is no need to remove the pins 31, this shaft coupling is suited for use where the servicing space for disassembling is limited.

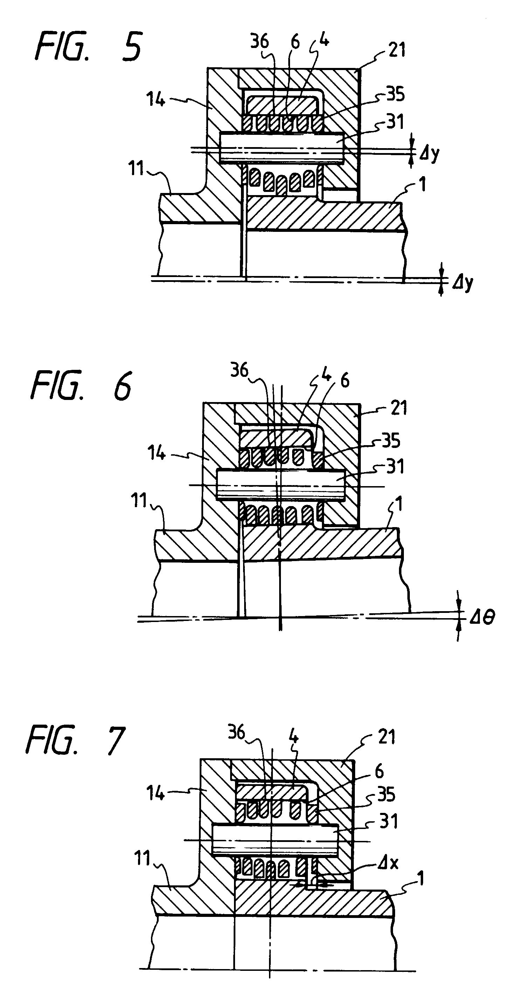

Now the functions of the shaft couplings just described will be explained below by reference to Fig. 5. Torque is transmitted from a drive shaft (not shown) through the first hub 1 connected thereto, the barrel-shaped coil springs 35 held by the flange 4 on the first hub, the pins 31 supported by the flange 14 on the second hub and cover 21, over which the barrel-shaped coil springs 35 are tight-fit, and the second hub 11, and then to a driven shaft (not shown) connected to the second hub 11, or in reversed direction. At this time, the loaded side of the middle portion 36 of the barrel-shaped coil springs 35 is compressed inwardly to an extent that varies with the amount of the torque transmitted, while the opposite side thereof elastically extends outwardly.

The shaft misalignments consist of offset misalignment, angular misalignment and axial misalignment.

The offset misalignment Δy as shown in Fig. 5 is accommodated by the deflection of the barrel-shaped coil springs 35, and the angular misalignment Δθ as shown in Fig. 6, and also the axial misalignment Δx as shown in Fig. 7 are respectively accommodated by the deflection of the barrel-shaped coil springs 35 as-shown in the figure.

Next, the characteristic of the barrel-shaped coil springs in case the above-mentioned coupling is exerted by the torque will be explained.

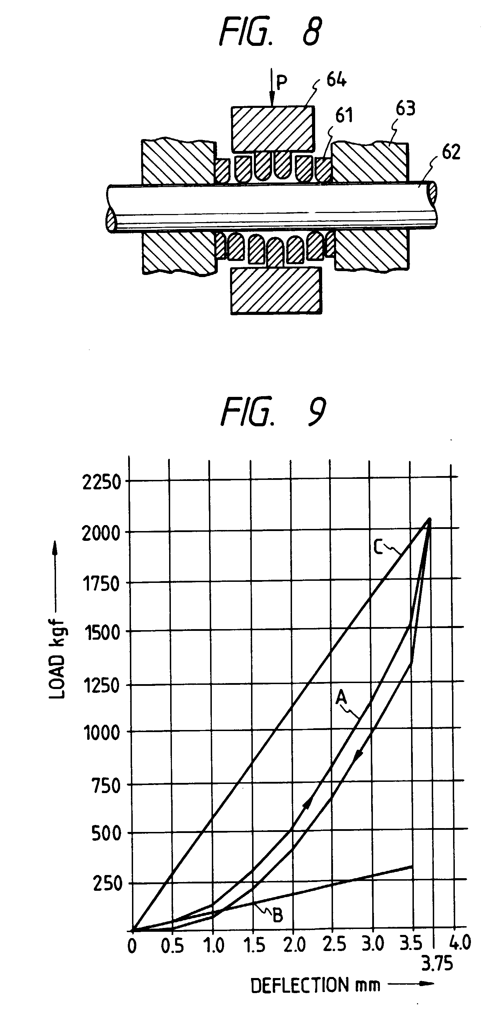

Fig. 8 shows a testing method for determining the load-deflection curve of the barrel-shaped coil spring. Metal supports 63 hold both ends of a pin 62 over which a barrel-shaped coil spring 61 is fitted. Both ends of the barrel-shaped coil spring 61 are shrink-fitted over the pin 62. The barrel-shaped coil spring 61 has a free length of 60 mm, a minimum inside diameter of 35 mm, and a maximum outside diameter of 65 mm. With the coil spring axially compressed to 55 mm, a load perpendicular to the spring axis is applied through a metal holder 64 to the center of the largest-diameter portion of the barrel-shaped coil spring 61.

Fig. 9 shows load-deflection curves. Nonlinear curve A representing hysteresis is one obtained from the above test. The area of hysteresis represents the amount of energy absorbed by the friction between adjoining coils of a spring. The spring deflecting greatly under a small load permits accommodation of a great amount of shaft misalignments. Substantially linear curve B shown for comparison was obtained by applying a load perpendicular to the axis of the coil spring. In this case, only elastic deflection occurred, without any friction between the adjoining coils. Curve C was obtained by applying a load along the axis of a cylindrical coil spring that exhibited the same amount of deflection under the maximum testing load.

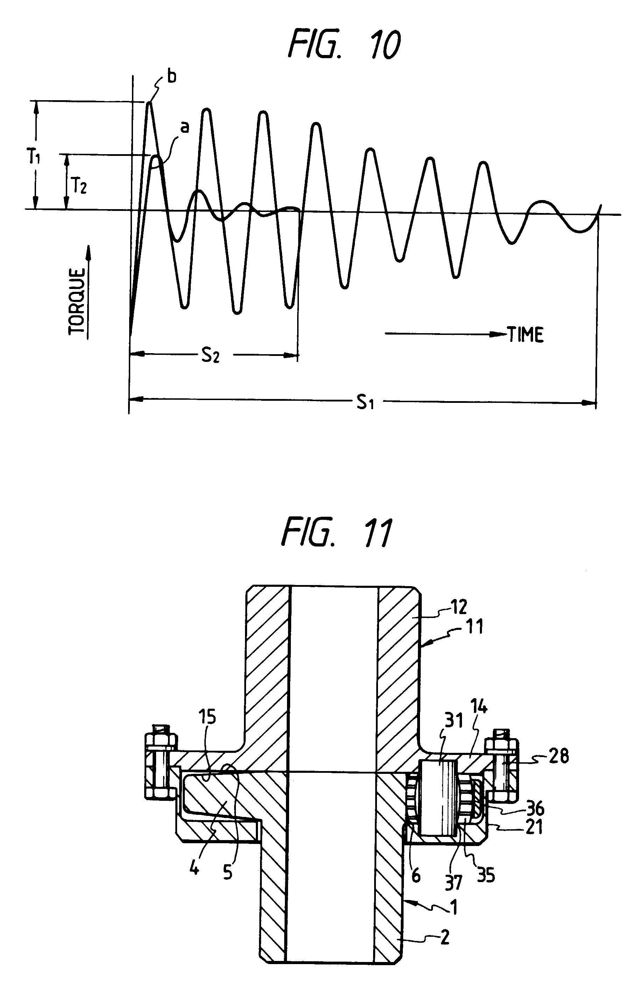

Fig. 10 is a torque-reducing curve schematically illustrating the shock-absorbing and torsional-vibration reducing functions. Curve a is for a flexible shaft coupling of this invention and curve b is for a conventional rigid shaft coupling such as a gear or a disk type shaft coupling. Obviously, the flexible shaft coupling of this invention has much greater shock-absorbing and torsional-vibration reducing abilities than the conventional couplings because of a great amount of resiliency and the friction between the adjoining coils. The shock-absorbing and torsional-vibration reducing functions of the flexible shaft coupling of this invention, when expressed in percentage T₂/T₁ and S₂/S₁, are 60 to 70 % and 20 to 60 %, respectively.

The barrel-shaped coil springs used as an resilient element for torque transmission in this invention deflect greatly at right angles to the axes thereof while exerting small stresses. The extremely small spring constant under smaller loads assures excellent accommodation of shaft misalignments without exerting much reaction force on the coupling.

The spring characteristic of a barrel-shaped coil spring fitted to the flexible coupling so that the adjoining coils thereof produce friction therebetween appears as a nonlinear hysteresis loop. The extremely great spring constant under heavier loads permits transmission of large torques. The deflection of the barrel-shaped coil spring and the friction produced by the adjoining coils thereof, in combination, absorb shock load from the transmission shaft and damp torsional vibration. Thus, the flexible shaft coupling of this invention absorbs large shock load and quickly reduces torsional vibration.

The barrel-shaped coil springs tight-fitted inside and outside cause no backlash. This feature assures high-speed rotation and high-precision position control.

Having the excellent features described above, the flexible shaft couplings of this invention are suited for practically all types of applications, particularly for machines and equipment subjected to heavy duties, such as those used in the steel industry, and those necessitating high speed and high accuracy, such as those used for printing.

Now some applications of the flexible shaft coupling according to this invention will be described. The parts similar to those in the first embodiment described before will be designated by similar reference characters, without repeating their detailed description.

Fig. 11 shows a flexible shaft coupling of this invention used in a vertical-shaft transmission system.

The flexible shaft coupling is held upright, with a drive and a driven shaft connected to the upper second hub 11 and the lower first hub 1, respectively. A motor is connected to the drive shaft and a pump is connected to the driven shaft. The flange face 5 of the first hub 1, which constitutes a portion of a spherical surface, supports a load on the drive shaft side. When any misalignment occurs between the drive and driven shafts, the flange face 15 of the second hub 11 tilts with rotation over the spherical flange face 5 of the first hub 1, with the resulting deflection of the barrel-shaped coil springs 35 accommodating the angular misalignment the drive and driven shafts.

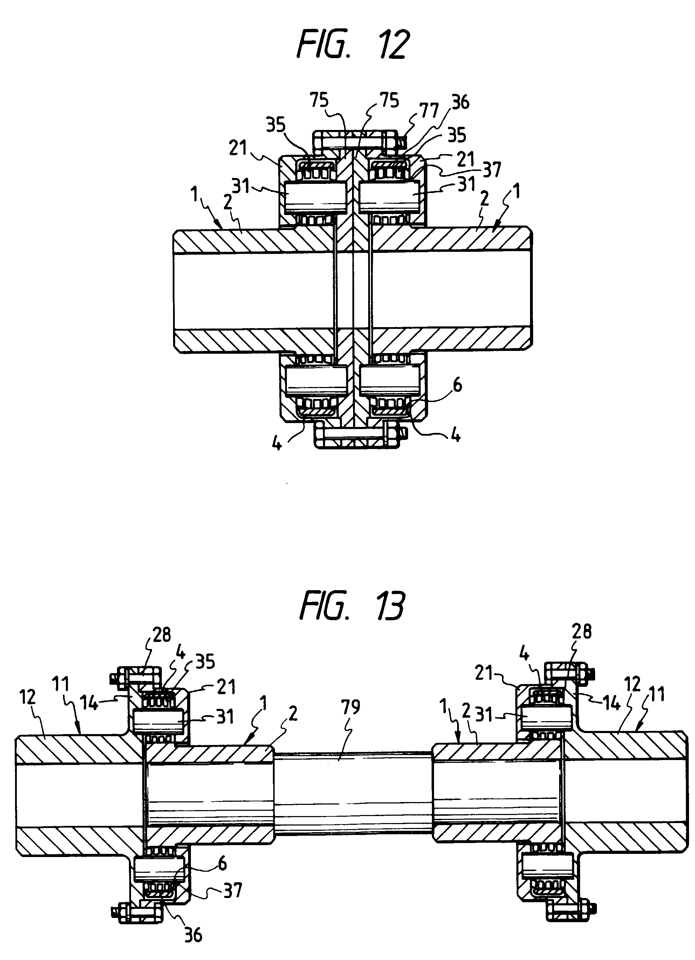

Fig. 12 shows a shaft coupling consisting of a combination of two flexible shaft couplings of this invention fixed together. In each of the two shaft couplings, the flange 4 of the first hub 1 is held between the holder 21 and an annular cover 75. The barrel-shaped coil springs 35 compressed between the holder 21 and annular cover 75 are held in the spring holes 6 in the flange 4. The pins 31 supported by the holder 21 and annular cover 75 pass through the barrel-shaped coil springs 35. Bolts 77 fasten together the two shaft couplings just described, with the mating faces of the annular covers 75 thereof kept in contact with each other.

Having a twice larger aligning capability than a single-unit counterpart, this dual flexible shaft coupling also has substantially twice as large shock absorbing and vibration damping capabilities.

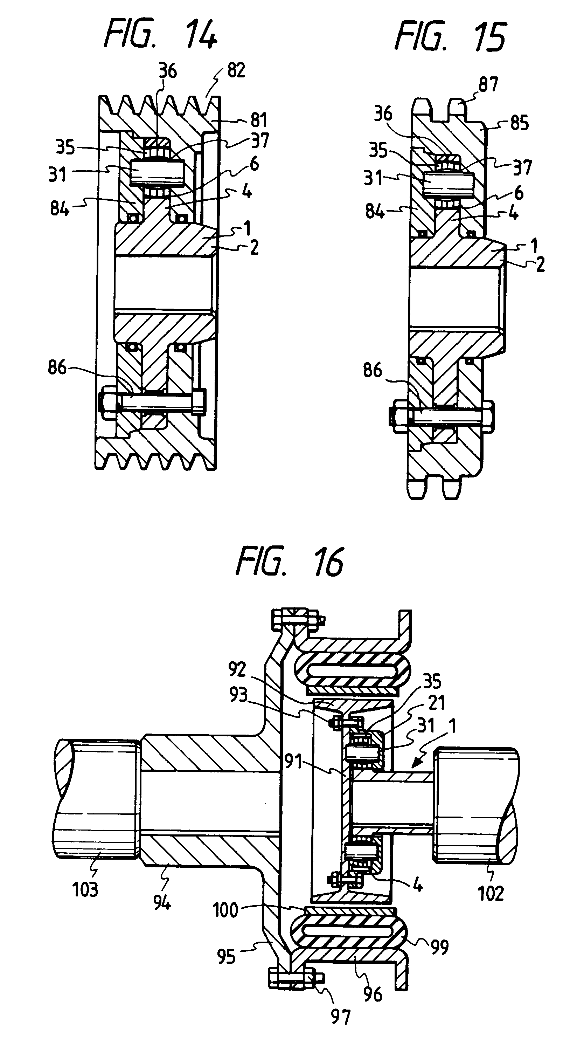

Fig. 13 shows a shaft coupling consisting of a combination of two flexible shaft couplings of this invention fixed together with an intermediate shaft therebetween. Each shaft coupling consists of the same members as those shown in Figs. 1 and 2. The first hubs 1 of the two shaft couplings are connected through an intermediate shaft 79 inserted therein. A drive and a driven shaft are connected to the second hubs 11 at opposite ends. The distance between the drive and driven shafts can be changed by changing the length of the intermediate shaft 79. This shaft coupling has greater accommodation of shaft misalignments, shock absorbing and vibration reducing functions than the one shown in Fig. 12. The position of the first hub 1 and the second hub 11 may be reversed; the first hub 1 on the outside and the second hub 11 on the inside.

Fig. 14 shows a flexible shaft coupling of this invention incorporated in a V-belt pulley. A holder 81 has V-belt grooves 82 cut around the periphery thereof. An annular cover 84 is fixed to the holder 81 with bolts 86, with the flange 4 of a hub 1 held between the holder 81 and annular cover 84. Barrel-shaped coil springs 35 compressed between the holder 81 and annular cover 84 are held in the spring holes 6 in the flange 4 of the hub 1. Pins 31 supported by the holder 81 and annular cover 84 pass through the barrel-shaped coil springs 35. A drive or a driven shaft is connected to the hub 1.

A flat-belt pulley can also incorporate a flexible shaft coupling of this invention in the same way as the V-belt pulley described above does. The difference between the flat- and V-belt pulleys is that the holder of the former has a groove-less cylindrical peripheral surface. The flexible shaft couplings incorporated in these belt pulleys, absorb shock load on their transmission mechanism and reduce vibration caused thereby. The incorporation of the flexible shaft couplings permits designing smaller belt pulleys having re-aligning, shock absorbing and vibration reducing functions.

Fig. 15 shows a flexible shaft coupling of this invention incorporated in a sprocket. The construction of the sprocket is essentially similar to that of the belt pulley. The difference between the sprocket and belt pulley is that the former has teeth 87 to engage with a chain cut around the periphery of the holder 85 thereof. The function and effect of the sprocket are similar to those of the belt pulleys described before.

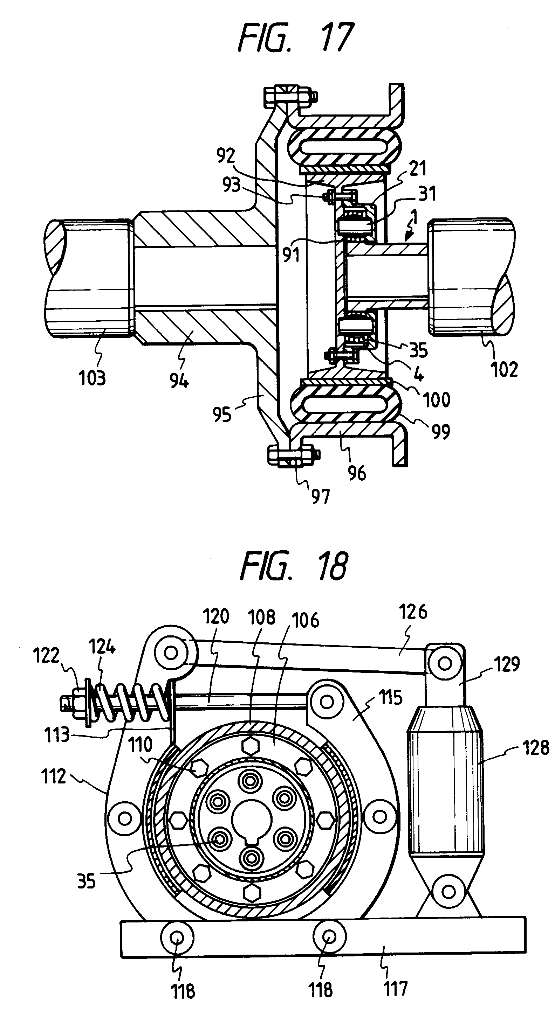

Figs. 16 and 17 show a flexible shaft coupling of this invention incorporated in an air clutch.

A rim having a frictional surface surrounds a cover 91. A holder 21 is fixed to the cover with bolts 93, with the flange 4 of a first hub 1 held between the cover 91 and holder 21. Barrel-shaped coil springs 35 compressed between the cover 91 and holder 21 are held in the spring holes in the flange 4 of the first hub 1. Pins 31 supported by the cover 91 and holder 21 pass through the barrel-shaped coil springs 35. A cylindrical member 96 is fixed to the flange 95 of a second hub 94 with bolts 97. A hollow rubber ring 99, with the internal surface thereof lined with a frictional material 100, is fitted in the cylindrical member 96. A compressed air source (not shown) is connected to the hollow ring 99. A drive shaft 102 and a driven shaft 103 are respectively connected to the first hub 1 and the second hub 94.

Fig. 16 shows an air clutch in the state of OFF. When compressed air is supplied, the hollow ring 99 expands inwardly as shown in Fig. 17, whereby the frictional material 100 comes in contact with the outer surface of the cover 91. As a consequence, torque is transmitted from the drive shaft 102 to the driven shaft 103 through the first hub 1, barrel-shaped coil springs 35, cover 91 , hollow ring 99 and second hub 94. The function and effect of this air clutch are similar to those of the belt pulleys described before.

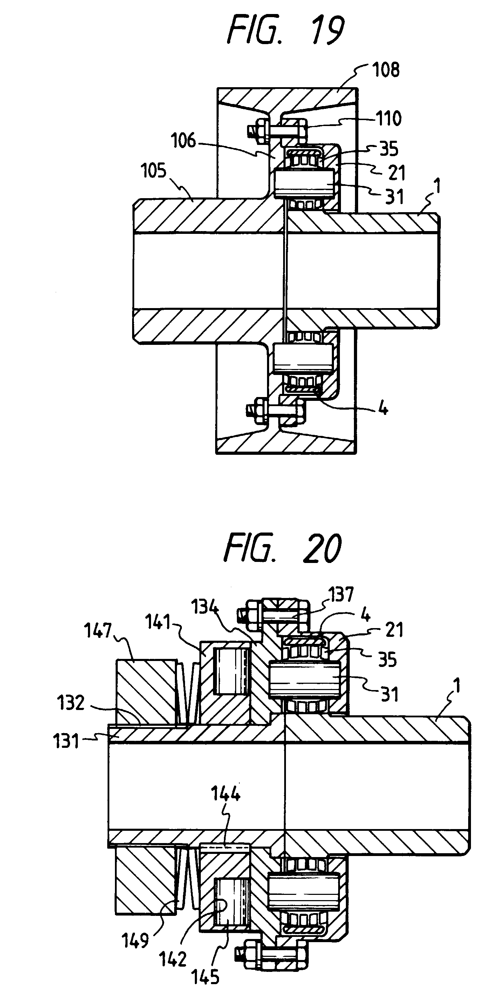

Fig. 18 shows a brake in which a flexible shaft coupling of this invention is incorporated. The brake has a brake drum whose construction is essentially similar to the flexible shaft coupling shown in Fig. 1. A rim 108 surrounds the flange 106 of a second hub 105 as shown in Fig. 19, with the brake applying its frictional force on the external surface of the rim 108. A holder 21 is fixed to the flange 106 of the second hub 105 with bolts 110. The flange 4 of a first hub 1 is held between the flange 106 and holder 21. Barrel-shaped coil springs 35 compressed between the flange of the second hub 105 and holder 21 are held in the spring holes 6 in the flange 4 of the first hub 1. Pins 31 supported by the flange 106 of the second hub 105 and holder 21 pass through the barrel-shaped coil springs 35. A driven and a drive shafts are respectively connected to the first hub 1 and second hub 105.

As shown in Fig. 18, a pair of curved brake shoes 112 and 115 facing each other are connected to a bed 117 with pins 118. The first brake shoe 112 and second brake shoe 115 are linked together with a connecting rod 120. The connecting rod 120 passes through the flange 113 of the first brake shoe 112, with an adjusting nut 122 screwed over one end thereof and a coil spring 124 interposed between the flange 113 and adjusting nut 122. The coil spring 124 exerts a force to bring the first brake shoe 112 and second brake shoe 115 closer to each other. A hydraulic cylinder 128 is connected to the first brake shoe 112 through a drive rod 126. When the hydraulic cylinder 128 is actuated, a piston rod 129 ascends to detach the brake shoes from the brake working face of the rim 108 mentioned before, thereby rendering the brake inactive. When the hydraulic cylinder 128 is stopped, the piston rod 129 descends to bring the brake shoes 112 and 115 into contact with the brake working face of the rim 108, thereby rendering the brake active.

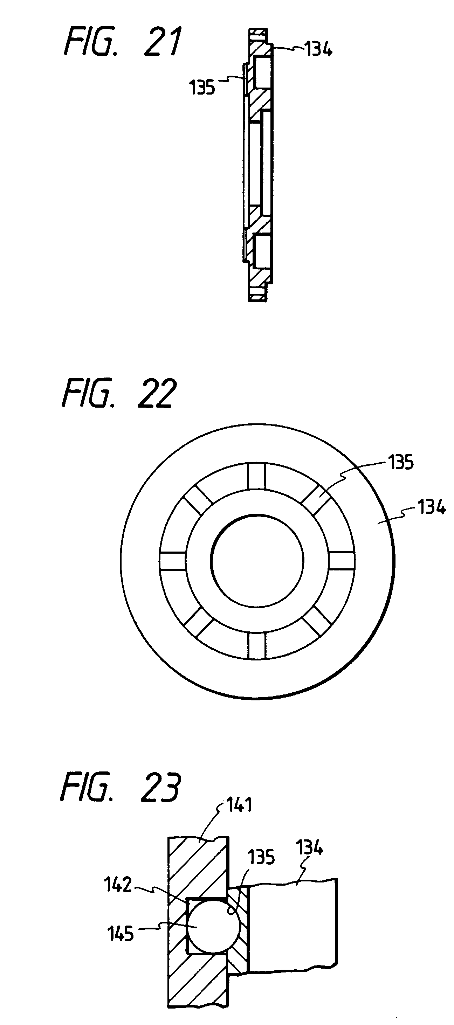

Fig. 20 shows a torque limiter in which a flexible shaft coupling of this invention is incorporated. An annular cover 134 rotatably fitted over a second hub 131 is connected to a holder 21 with bolts 137. The flange 4 of a first hub 1 is held between the annular cover 134 and holder 21. Barrel-shaped coil springs 35 compressed between the annular cover 134 and holder 21 are held in the spring holes 6 in the flange 4 of the first hub 1. Pins 31 supported by the annular cover 134 and holder 21 pass through the barrel-shaped coil springs 35. Eight diametrically extending arched grooves 135 are provided in a face of the annular cover opposite to the face to which the holder 21 is connected at given circular intervals, as shown in Figs. 21 to 23. A movable ring 141 that moves axially by means of a sliding key 144 is attached to the second hub 131. The movable ring 141 has roller grooves 142 facing the arched grooves 135. A roller 145 is fitted in each roller groove 142, with part of the roller 145 being fitted in the opposite arched groove 135. A Belleville spring 149 is interposed between the movable ring 141 and an adjusting nut 147 screwed over the second hub 131. A drive and a driven shafts are respectively connected to the first hub 1 and second hub 131. The Belleville spring 149 presses the roller 145 against the bottom of the arched groove 135 through the movable ring 141.

In the torque limiter just described, torque is transmitted from the drive shaft to the driven shaft through the first hub 1, barrel-shaped coil springs 35, annular cover 134, rollers 145, movable ring 141, and second hub 131. When an excess torque is transmitted to the driven shaft and the torque reaches the disengagement torque previously preset, the arched grooves 135 in the annular cover move away from the rollers 145, thereby disengaging the annular cover 134 from the movable ring 141 and, consequently, disconnecting the transmission of torque from the drive shaft to the driven shaft.

## Claims

1. A flexible shaft coupling comprising a first hub (1) and a second hub (11) respectively having outwardly extending flanges (4) and (14) at one end of the cylindrical parts (2, 12) thereof and being connectable transmission shafts, the first hub (1) having a plurality of spring holes (6) perforated through and along the circumference of the flange (4) thereof, a holder (21) fixed to the flange (14) of the second hub (11) so as to hold the flange (4) of the first hub (1) therein, with the cylindrical part (2) of the first hub (1) passing therethrough, with a space large enough to accommodate shaft misalignments left between the flange (4) of the first hub (1) and each of the second hub (11) and holder (21), and pins (31) in coil springs (35), respectively, passing through the spring holes (6) in the flange (4) of the first hub (1) said pins (31) being supported between the flange (14) of the second hub (11) and the holder (21), which is characterized in that:
the coil springs (35) are of the barrel-shaped type and compressed between the flange (14) of the second hub (11) and the holder (21)so as to deflect on transmission of torque and bring the adjoining coils thereof into contact with each other, with the largest-diameter portion (36) of the barrel-shaped coil springs (35) being tight-fitted in the spring holes (6) in the first hub (1) and the smallest-diameter portions (37) thereof being tight-fitted over said pins (31).

2. A flexible shaft coupling according to claim 1, in which both ends of said pins (31) supported by the flange (14) of the second hub (11) and the holder (21) are inserted in closed-end pin holes (16) provided therein, and the second hub (11) and the holder (21) are fixed together with bolts (28) passed through the peripheral portion thereof.

3. A flexible shaft coupling according to claim 1, in which the second hub (41) and the holder (45) are fixed together with bolts (48) having pin portions passing through the flange (42) of the second hub (41) and the holder (45), and the smallest-diameter portions (37) of the barrel-shaped coil springs (35) are tight-fitted over the pin portions of the bolts (48).

4. A flexible shaft coupling according to claim 1, in which an annular intermediate ring (57) is interposed between the first hub (1) and a second hub (51), the second hub (51) and a holder (54) are fixed together through the intermediate ring (57) by means of bolts (28) passed through the peripheral portion of the flange (52) of the second hub (51), intermediate ring (57) and holder (54), and both ends of the pins (31) supported by the intermediate ring (57) and holder (54) are inserted in pin holes (55) and (58) provided therein.

5. A flexible shaft coupling according to any of the preceding claims, in which the barrel-shaped coil springs (35) between the second hub (11) and holder (21) are compressed by 5 % to 15 % of the free height of the springs.

6. A flexible shaft coupling according to any of claims 1, 2 and 5, in which the largest-diameter portion (36) of the barrel-shaped coil springs (35) is either shrink- or expansion-fitted in the spring holes (6) in the first hub (1).

7. A flexible shaft coupling according to any of claims 1, 2 and 5, in which the smallest-diameter portions (37) of the barrel-shaped coil springs (35) are either shrink- or expansion-fitted over the pins (31).

8. A flexible shaft coupling according to any of the preceding claims, in which the largest- and smallest-diameter portions (36) and (37) of the barrel-shaped coil springs (35) are ground.

9. A flexible shaft coupling according to any of the preceding claims, in which the flange face (5) of one of the two hubs (1) is shaped like a portion of a spherical surface.

10. A flexible shaft coupling comprising two coupling members, each of which comprises a hub (1) having an outwardly extending flange (4) at one end of the cylindrical part (2) thereof and being connected to a transmission shaft, the hub (1) having a plurality of spring holes (6) perforated through and along the circumference of the flange (4) thereof, and a holder (21) through which the cylindrical part (2) of the hub (1) passes, which is characterized in that:
an annular cover (75) is held in contact with an end face of the holder (21) so as to hold the flange (4) of the hub (1) therein, with a space large enough to accommodate shaft misalignments left between the flange (4) of the hub (1) and each of the holder (21) and annular cover (75), coil springs (35) pass through the spring holes (6) provided in the flange (4) of the hub (1), with the two coupling members fixed together with the faces of the annular covers thereof facing each other,
and the coil springs (35) are of the barrel-shaped type and compressed between the holder (21) and the annular cover (75) so as to deflect on transmission of torque and bring the adjoining coils thereof into contact with each other, with the largest-diameter portion (36) of the barrel-shaped coil springs (35) being tight-fitted in the spring holes (6) in the hub (1) and the smallest-diameter portions (37) thereof being tight-fitted over pins (31) supported between the holder (21) and the annular cover (75).

11. A flexible shaft coupling comprising two coupling members, each of which comprises a first hub (1) and a second hub (11) respectively having outwardly extending flanges (4) and (14) at one end of the cylindrical parts (2, 12) thereof and being connected to transmission shafts, the first hub (1) having a plurality of spring holes (6) perforated through and along the circumference of the flange (4) thereof, a holder (21) fixed to the flange (14) of the second hub (11) so as to hold the flange (4) of the first hub (1) therein, with the cylindrical part (2) of the first hub (1) passing therethrough, with a space large enough to accommodate shaft misalignments left between the flange (4) of the first hub (1) and each of the second hub (11) and holder (21), and coil springs (35) passing through the spring holes (6) in the flange (4) of the first hub (1), with the two coupling members fixed together through an intermediate shaft (79) inserted in the first hubs (1) or second hubs (11) thereof, which is characterized in that:
the coil springs (35) are of the barrel-shaped type and compressed between the flange (14) of the second hub (11) and the holder (21) so as to deflect on transmission of torque and bring the adjoining coils thereof into contact with each other, with the largest-diameter portion (36) of the barrel-shaped coil springs (35) being tight-fitted in the spring holes (6) in the first hub (1) and the smallest-diameter portions (37) thereof being tight-fitted over pins (31) supported between the flange (14) of the second hub (11) and the holder (21).

12. A flexible shaft coupling comprising a hub (1) having an outwardly extending flange (4) at a middle portion of the cylindrical part (2) thereof and being connected to a transmission shaft, the hub (1) having a plurality of spring holes (6) perforated through and along the circumference of the flange (4) thereof, a holder (81) through which one of two cylindrical parts (2) of the hub (1) passes, an annular cover (84) through which the other cylindrical part (2) of the hub (1) passes, the annular cover (84) being kept in contact with an end face of the holder (81) so as to hold the flange (4) of the hub (1) therein, and coil springs (35) passing through the spring holes (6) provided in the flange (4) of the hub (1), which is characterized in that:
the holder (81) has a peripheral surface (82) kept in contact with a belt, the coil springs (35) are of the barrel-shaped type and compressed between the annular cover (84) and the holder (81) so as to deflect on transmission of torque and bring the adjoining coils thereof into contact with each other, with the largest-diameter portion (36) of the barrel-shaped coil springs (35) being tight-fitted in the spring holes (6) in the first hub (1) and the smallest-diameter portions (37) thereof being tight-fitted over pins (31) supported between the annular cover (84) and the holder (81).

13. A flexible shaft coupling comprising a hub (1) having an outwardly extending flange (4) at a middle portion of the cylindrical part (2) thereof and being connected to a transmission shaft, the hub (1) having a plurality of spring holes (6) perforated through and along the circumference of the flange (4) thereof, a holder (85) through which one of two cylindrical parts (2) of the hub (1) passes, an annular cover (84) through which the other cylindrical part (2) of the hub (1) passes, the annular cover (84) being kept held in contact with an end face of the holder (85) so as to hold the flange (4) of the hub (1) therein, and coil springs (35) passing through the spring holes (6) provided in the flange (4) of the hub (1), which is characterized in that:
the holder (85) has a peripheral surface on which teeth (87) to engage with a transmission chain are provided, the coil springs (35) are of the barrel-shaped type and compressed between the annular cover (84) and the holder (85) so as to deflect on transmission of torque and bring the adjoining coils thereof into contact with each other, with the largest-diameter portion (36) of the barrel-shaped coil springs (35) being tight-fitted in the spring holes (6) in the first hub (1) and the smallest-diameter portions (37) thereof being tight-fitted over pins (31) supported between the annular cover (84) and the holder (85).

## Patentansprüche

1. Flexible Wellenkupplung mit: einer ersten Nabe (1) und einer zweiten Nabe (11), die jeweils nach außen verlaufende Flansche (4) und (14) an einem Ende ihrer zylindrischen Teile (2, 12) haben und mit Transmissionswellen verbunden werden können, wobei die erste Nabe (1) mehrere Federlöcher (6) hat, die durch ihren Flansch (4) und an dessen Umfang entlang gelocht sind, einem Halter (21), der an dem Flansch (14) der zweiten Nabe (11) befestigt ist, um den Flansch (4) der ersten Nabe (1) in ihm zu halten, wobei der zylindrische Teil (2) der ersten Nabe (1) ihn durchläuft und ein ausreichend großer Raum zum Anpassen von Wellenfehlausrichtungen zwischen dem Flansch (4) der ersten Nabe (1) und der zweiten Nabe (11) bzw. dem Halter (21) belassen ist, und Stiften (31) in jeweiligen Schraubenfedern (35), die durch die Federlöcher (6) in dem Flansch (4) der ersten Nabe (1) verlaufen, wobei die Stifte (31) zwischen dem Flansch (14) der zweiten Nabe (11) und dem Halter (21) gestützt sind,
dadurch gekennzeichnet, daß:
die Schraubenfedern (35) tonnenförmig und zwischen dem Flansch (14) der zweiten Nabe (11) und dem Halter (21) zusammengedrückt sind, um bei Drehmomentübertragung durchzufedern und ihre benachbarten Windungen in Berührung miteinander zu bringen, wobei der Abschnitt (36) der tonnenförmigen Schraubenfedern (35) mit größtem Durchmesser in fester Passung in den Federlöchern (6) in der ersten Nabe (1) und ihre Abschnitte (37) mit kleinstem Durchmesser in fester Passung über den Stiften (31) vorgesehen sind.

2. Flexible Wellenkupplung nach Anspruch 1, wobei beide Enden der durch den Flansch (14) der zweiten Nabe (11) und den Halter (21) gestützten Stifte (31) in darin vorgesehene Stiftlöcher (16) mit geschlossenen Enden eingefügt und die zweite Nabe (11) und der Halter (21) mit Schrauben (28) aneinander befestigt sind, die durch ihren Begrenzungsabschnitt geführt sind.

3. Flexible Wellenkupplung nach Anspruch 1, wobei die zweite Nabe (41) und der Halter (45) mit Schrauben (48) mit Stiftabschnitten aneinander befestigt sind, die durch den Flansch (42) der zweiten Nabe (41) und den Halter (45) verlaufen, und die Abschnitte (37) der tonnenförmigen Schraubenfedern (35) mit kleinstem Durchmesser in fester Passung über den Stiftabschnitten der Schrauben (48) vorgesehen sind.

4. Flexible Wellenkupplung nach Anspruch 1, wobei ein ringförmiger Zwischenring (57) zwischen der ersten Nabe (1) und einer zweiten Nabe (51) eingefügt ist, die zweite Nabe (51) und ein Halter (54) über den Zwischenring (57) mittels Schrauben (28) aneinander befestigt sind, die durch den Begrenzungsabschnitt des Flansches (52) der zweiten Nabe (51), den Zwischenring (57) und den Halter (54) geführt sind, und beide Enden der durch den Zwischenring (57) und den Halter (54) gestützten Stifte (31) in darin vorgesehene Stiftlöcher (55) und (58) eingefügt sind.

5. Flexible Wellenkupplung nach einem der vorhergegangenen Ansprüche, wobei die tonnenförmigen Schraubenfedern (35) zwischen der zweiten Nabe (11) und dem Halter (21) um 5 % bis 15 % der freien Höhe der Federn zusammengedrückt sind.

6. Flexible Wellenkupplung nach einem der Ansprüche 1, 2 und 5, wobei der Abschnitt (36) der tonnenförmigen Schraubenfedern (35) mit größtem Durchmesser in Schrumpf- oder Dehnpassung in den Federlöchern (6) in der ersten Nabe (1) vorgesehen ist.

7. Flexible Wellenkupplung nach einem der Ansprüche 1, 2 und 5, wobei die Abschnitte (37) der tonnenförmigen Schraubenfedern (35) mit kleinstem Durchmesser in Schrumpf- oder Dehnpassung über den Stiften (31) vorgesehen sind.

8. Flexible Wellenkupplung nach einem der vorhergegangenen Ansprüche, wobei die Abschnitte (36) und (37) der tonnenförmigen Schraubenfedern (35) mit größtem und kleinstem Durchmesser geschliffen sind.

9. Flexible Wellenkupplung nach einem der vorhergegangenen Ansprüche, wobei die Flanschfläche (5) einer (1) der beiden Naben wie ein Abschnitt einer Kugelfläche geformt ist.

10. Flexible Wellenkupplung mit zwei Kupplungselementen, von denen jedes aufweist: eine Nabe (1) mit einem nach außen verlaufenden Flansch (4) an einem Ende ihres zylindrischen Teils (2), die mit einer Transmissionswelle verbunden ist, wobei die Nabe (1) mehrere Federlöcher (6) hat, die durch ihren Flansch (4) und an dessen Umfang entlang gelocht sind, und einen Halter (21), durch den der zylindrische Teil (2) der Nabe (1) verläuft, dadurch
gekennzeichnet, daß:
ein Ringdeckel (75) in Berührung mit einer Endfläche des Halters (21) gehalten wird, um den Flansch (4) der Nabe (1) darin zu halten, wobei ein ausreichend großer Raum zum Anpassen von Wellenfehlausrichtungen zwischen dem Flansch (4) der Nabe (1) und dem Halter (21) bzw. dem Ringdeckel (75) belassen ist, Schraubenfedern (35) durch die in dem Flansch (4) der Nabe (1) vorgesehenen Federlöcher (6) verlaufen, wobei die beiden Kupplungselemente so aneinander befestigt sind, daß sich die Flächen ihrer Ringdeckel gegenüberliegen, und die Schraubenfedern (35) tonnenförmig und zwischen dem Halter (21) und dem Ringdeckel (75) zusammengedrückt sind, um bei Drehmomentübertragung durchzufedern und ihre benachbarten Windungen in Berührung miteinander zu bringen, wobei der Abschnitt (36) der tonnenförmigen Schraubenfedern (35) mit größtem Durchmesser in fester Passung in den Federlöchern (6) in der Nabe (1) und ihre Abschnitte (37) mit kleinstem Durchmesser in fester Passung über zwischen dem Halter (21) und dem Ringdeckel (75) gestützten Stiften (31) vorgesehen sind.

11. Flexible Wellenkupplung mit zwei Kupplungselementen, von denen jedes aufweist: eine erste Nabe (1) und eine zweite Nabe (11), die jeweils nach außen verlaufende Flansche (4) und (14) an einem Ende ihrer zylindrischen Teile (2, 12) haben und mit Transmissionswellen verbunden sind, wobei die erste Nabe (1) mehrere Federlöcher (6) hat, die durch ihren Flansch (4) und an.dessen Umfang entlang gelocht sind, einen Halter (21), der an dem Flansch (14) der zweiten Nabe (11) befestigt ist, um den Flansch (4) der ersten Nabe (1) in ihm zu halten, wobei der zylindrische Teil (2) der ersten Nabe (1) ihn durchläuft und ein ausreichend großer Raum zum Anpassen von Wellenfehlausrichtungen zwischen dem Flansch (4) der ersten Nabe (1) und der zweiten Nabe (11) bzw. dem Halter (21) belassen ist, und Schraubenfedern (35), die durch die Federlöcher (6) in dem Flansch (4) der ersten Nabe (1) verlaufen, wobei die beiden Kupplungselemente über eine Zwischenwelle (79) aneinander befestigt sind, die in ihre erste Nabe (1) oder zweite Nabe (11) eingefügt
ist, dadurch gekennzeichnet, daß:
die Schraubenfedern (35) tonnenförmig und zwischen dem Flansch (14) der zweiten Nabe (11) und dem Halter (21) zusammengedrückt sind, um bei Drehmomentübertragung durchzufedern und ihre benachbarten Windungen in Berührung miteinander zu bringen, wobei der Abschnitt (36) der tonnenförmigen Schraubenfedern (35) mit größtem Durchmesser in fester Passung in den Federlöchern (6) in der ersten Nabe (1) und ihre Abschnitte (37) mit kleinstem Durchmesser in fester Passung über zwischen dem Flansch (14) der zweiten Nabe (11) und dem Halter (21) gestützten Stiften (31) vorgesehen sind.

12. Flexible Wellenkupplung mit: einer Nabe (1) mit einem nach außen verlaufenden Flansch (4) an einem Mittelabschnitt ihres zylindrischen Teils (2), die mit einer Transmissionswelle verbunden ist, wobei die Nabe (1) mehrere Federlöcher (6) hat, die durch ihren Flansch (4) und an dessen Umfang entlang gelocht sind, einem Halter (81), durch den ein von zwei zylindrischen Teilen (2) der Nabe (1) verläuft, einem Ringdeckel (84), durch den der andere zylindrische Teil (2) der Nabe (1) verläuft, wobei der Ringdeckel (84) in Berührung mit einer Endfläche des Halters (81) gehalten wird, um den Flansch (4) der Nabe (1) darin zu halten, und Schraubenfedern (35), die durch die in dem Flansch (4) der Nabe (1) vorgesehenen Federlöcher (6) verlaufen, dadurch gekennzeichnet, daß:
der Halter (81) eine in Berührung mit einem Riemen gehaltene Begrenzungsfläche (82) hat, die Schraubenfedern (35) tonnenförmig und zwischen dem Ringdeckel (84) und dem Halter (81) zusammengedrückt sind, um bei Drehmomentübertragung durchzufedern und ihre benachbarten Windungen in Berührung miteinander zu bringen, wobei der Abschnitt (36) der tonnenförmigen Schraubenfedern (35) mit größtem Durchmesser in fester Passung in den Federlöchern (6) in der ersten Nabe (1) und ihre Abschnitte (37) mit kleinstem Durchmesser in fester Passung über zwischen dem Ringdeckel (84) und dem Halter (81) gestützten Stifen (31) vorgesehen sind.

13. Flexible Wellenkupplung mit: einer Nabe (1) mit einem nach außen verlaufenden Flansch (4) an einem Mittelabschnitt ihres zylindrischen Teils (2), die mit einer Transmissionswelle verbunden ist, wobei die Nabe (1) mehrere Federlöcher (6) hat, die durch ihren Flansch (4) und an dessen Umfang entlang gelocht sind, einem Halter (85), durch den einer von zwei zylindrischen Teilen (2) der Nabe (1) verläuft, einem Ringdeckel (84), durch den der andere zylindrische Teil (2) der Nabe (1) verläuft, wobei der Ringdeckel (84) in Berührung mit einer Endfläche des Halters (85) gehalten wird, um den Flansch (4) der Nabe (1) darin zu halten, und Schraubenfedern (35), die durch die in dem Flansch (4) der Nabe (1) vorgesehenen Federlöcher (6) verlaufen, dadurch gekennzeichnet, daß:
der Halter (85) eine Begrenzungsfläche hat, auf der Zähne (87) vorgesehen sind, um in eine Transmissionskette einzugreifen, die Schraubenfedern (35) tonnenförmig und zwischen dem Ringdeckel (84) und dem Halter (85) zusammengedrückt sind, um bei Drehmomentübertragung durchzufedern und ihre benachbarten Windungen in Berührung miteinander zu bringen, wobei der Abschnitt (36) der tonnenförmigen Schraubenfedern (35) mit größtem Durchmesser in fester Passung in den Federlöchern (6) in der ersten Nabe (1) und ihre Abschnitte (37) mit kleinstem Durchmesser in fester Passung über zwischen dem Ringdeckel (84) und dem Halter (85) gestützten Stiften (31) vorgesehen sind.

## Revendications

1. Un accouplement flexible d'arbres comprenant un premier moyeu (1) et un second moyeu (11) ayant respectivement des flasques (4) et (14) s'étendant vers l'extérieur à une extrémité de leurs parties cylindriques (2, 12) et pouvant être connectés à des arbres de transmission, le premier moyeu (1) ayant une pluralité de trous de ressort (6) perforés à travers et le long de la circonférence de son flasque (4), une cage (21) fixée au flasque (14) du second moyeu (11) de manière à maintenir dedans le flasque (4) du premier moyeu (1) avec la partie cylindrique (2) du premier moyeu (1) la traversant avec un espace, suffisamment grand pour adapter des désalignements d'arbres, laissé entre le flasque (4) du premier moyeu (1) et chacun du second moyeu (11) et de la cage (21), et des broches (31) dans des ressorts hélicoïdaux (35) traversant respectivement les trous de ressort (6) dans le flasque (4) du premier moyeu (1), lesdites broches (31) étant supportées entre le flasque (14) du second moyeu (11) et la cage (21), qui est caractérisé en ce que :
les ressorts hélicoïdaux (35) sont du type bombé et sont comprimés entre le flasque (14) du second moyeu (11) et la cage (21) de manière à se cintrer lors de la transmission d'un moment de torsion et amener leurs spirales adjacentes en contact les unes avec les autres, avec la portion de plus grand diamètre (36) des ressorts hélicoïdaux bombés (35) étant ajustée à frottement dur dans les trous de ressort (6) dans le premier moyeu (1) et leurs portions de plus petit diamètre (37) ajustées à frottement dur sur lesdites broches (31).

2. Un accouplement flexible d'arbres selon la revendication 1,
dans lequel les deux extrémités desdites broches (31) supportées par le flasque (14) du second moyeu (11) et la cage (21) sont insérées dans des trous borgnes de broche (16) disposés dedans et le second moyeu (11) et la cage (21) sont fixés ensemble par des goujons (28) passés à travers leur portion périphérique.

3. Un accouplement flexible d'arbres selon la revendication 1,
dans lequel le second moyeu (41) et la cage (45) sont fixés ensemble par des goujons (48) ayant des portions de broche traversant le flasque (42) du second moyeu (41) et la cage (45) et les portions de plus faible diamètre (37) des ressorts hélicoïdaux bombés (35) sont ajustées à frottement dur sur les portions de broche des goujons (48).

4. Un accouplement flexible d'arbres selon la revendication 1,
dans lequel un bague annulaire intermédiaire (57) est interposée entre le premier moyeu (1) et un second moyeu (51), le second moyeu (51) et une cage (54) sont fixés ensemble à travers la bague intermédiaire (57) au moyen de goujons (28) passés à travers la portion périphérique du flasque (52) du second moyeu (51), la bague intermédiaire (57) et la cage (54) et les deux extrémités des broches (31) supportées par la bague intermédiaire (57) et la cage (54) sont insérées dans des trous de broche (55) et (58) disposés dedans.

5. Un accouplement flexible d'arbres selon l'une quelconque des revendications précédentes,
dans lequel les ressorts hélicoïdaux bombés (35) entre le second moyeu (11) et la cage (21) sont comprimés de 5 à 15 % de la hauteur libre des ressorts.

6. Un accouplement flexible d'arbres selon l'une quelconque des revendications 1, 2 et 5,
dans lequel la portion de plus grand diamètre (36) des ressorts hélicoïdaux bombés (35) est fixée soit par ajustage serré par retrait, soit par ajustage par expansion, dans les trous de ressort (6) dans le premier moyeu (1).

7. Un accouplement flexible d'arbres selon l'une quelconque des revendications 1, 2 et 5,
dans lequel les portions de plus petit diamètre (37) des ressorts hélicoïdaux bombés (35) sont fixées soit par ajustage serré par retrait, soit par ajustage par expansion, sur les broches (31).

8. Un accouplement flexible d'arbres selon l'une quelconque des revendications précédentes,
dans lequel les portions de plus grand et de plus petit diamètres (36) et (37) des ressorts hélicoïdaux bombés (35) sont meulées.

9. Un accouplement flexible d'arbres selon l'une quelconque des revendications précédentes,
dans lequel la face de flasque (5) de l'un des deux moyeux (1) est conformée selon une portion d'une surface sphérique.

10. Un accouplement flexible d'arbres comprenant deux organes d'accouplement dont chacun comprend un moyeu (1) ayant un flasque (4) s'étendant vers l'extérieur à une extrémité de sa partie cylindrique (2) et étant connecté à un arbre de transmission, le moyeu (1) ayant une pluralité de trous de ressort (6) perforés à travers et le long de la périphérie de son flasque (4) et une cage (21) à travers laquelle passe la partie cylindrique (2) du moyeu (1), qui est caractérisé en ce que :
un couvercle annulaire (75) est maintenu en contact avec une face d'extrémité de la cage (21) de manière à maintenir dedans le flasque (4) du moyeu (1) avec un espace, suffisamment grand pour adapter des désalignements d'arbres, laissé entre le flasque (4) du moyeu (1) et chacun de la cage (21) et du couvercle annulaire (75), des ressorts hélicoïdaux (35) traversent les trous de ressort (6) disposés dans le flasque (4) du moyeu (1), avec les deux organes d'accouplement fixés ensemble avec les faces de leurs couvercles annulaires se faisant face l'une l'autre,
et les ressorts hélicoïdaux (35) sont du type bombé et sont comprimés entre la cage (21) et le couvercle annulaire (75) de manière à se cintrer lors de la transmission d'un couple et amener leurs spirales adjacentes en contact les unes avec les autres, avec la portion de plus grand diamètre (36) des ressorts hélicoïdaux bombés (35) ajustée à frottement dur dans les trous de ressort (6) dans le moyeu (1) et leurs portions de plus petit diamètre (37) ajustées à frottement dur sur des broches (31) supportées entre la cage (21) et le couvercle annulaire (75).

11. Un accouplement flexible d'arbres comprenant deux organes d'accouplement dont chacun comprend un premier moyeu (1) et un second moyeu (11) ayant respectivement des flasques (4) et (14) s'étendant vers l'extérieur à une extrémité de leurs parties cylindriques (2, 12) et étant connectés à des arbres de transmission, le premier moyeu (1) ayant une pluralité de trous de ressort (6) perforés à travers et le long de la circonférence de son flasque (4), une cage (21) fixée au flasque (14) du second moyeu (11) de manière à maintenir dedans le flasque (4) du premier moyeu (1) avec la partie cylindrique (2) du premier moyeu (1) la traversant avec un espace, suffisamment grand pour adapter des désalignements d'arbres, laissé entre le flasque (4) du premier moyeu (1) et chacun du second moyeu (11) et de la cage (21), et des ressorts hélicoïdaux (35) traversant les trous de ressort (6) dans le flasque (4) du premier moyeu (1), avec les deux organes d'accouplement fixés ensemble par un arbre intermédiaire (79) inséré dans leurs premiers moyeux (1) ou leurs seconds moyeux (11) qui est caractérisé en ce que :
les ressorts hélicoïdaux (35) sont du type bombé et sont comprimés entre le flasque (14) du second moyeu (11) et la cage (21) de manière à se cintrer lors de la transmission d'un moment de torsion et amener leurs spirales adjacentes en contact les unes avec les autres, avec la portion de plus grand diamètre (36) des ressorts hélicoïdaux bombés (35) ajustée à frottement dur dans les trous de ressort (6) dans le premier moyeu (1) et leurs portions de plus petit diamètre (37) ajustées à frottement dur sur des broches (31) supportées entre le flasque (14) du second moyeu (11) et la cage (21).

12. Un accouplement flexible d'arbres comprenant un moyeu (1) ayant un flasque (4) s'étendant vers l'extérieur à une portion médiane de sa partie cylindrique (2) et étant connecté à un arbre de transmission, le moyeu (1) ayant une pluralité de trous de ressort (6) perforés à travers et le long de la circonférence de son flasque (4), une cage (81) que traverse l'une de deux parties cylindriques (2) du moyeu (1), un couvercle annulaire (84) que traverse l'autre partie cylindrique (2) du moyeu (1), le couvercle annulaire (84) étant maintenu en contact avec une face d'extrémité de la cage (81) de manière à maintenir le flasque (4) du moyeu (1) dedans, et des ressorts hélicoïdaux (35) traversant les trous de ressort (6) disposés dans le flasque (4) du moyeu (1), qui est caractérisé en ce que :
la cage (81) a une surface périphérique (82) maintenue en contact avec une courroie, les ressorts hélicoïdaux (35) sont du type bombé et sont comprimés entre le couvercle annulaire (84) et la cage (81) de manière à se cintrer lors de la transmission d'un moment de torsion et amener leurs spirales adjacentes en contact les unes avec les autres, avec la portion de plus grand diamètre (36) des ressorts hélicoïdaux bombés (35) ajustée à frottement dur dans les trous de ressort (6) dans le premier moyeu (1) et leurs portions de plus petit diamètre (37) ajustées à frottement dur sur des broches (31) supportées entre le couvercle annulaire (84) et la cage (81).

13. Un accouplement flexible d'arbres comprenant un moyeu (1) ayant un flasque (4) s'étendant vers l'extérieur à une portion médiane de sa partie cylindrique (2) et étant connecté à un arbre de transmission, le moyeu (1) ayant une pluralité de trous de ressort (6) perforés à travers et le long de la circonférence de son flasque (4), une cage (85) que traverse l'une de deux parties cylindriques (2) du moyeu (1), un couvercle annulaire (84) que traverse l'autre partie cylindrique (2) du moyeu (1), le couvercle annulaire (84) étant maintenu en contact avec une face d'extrémité de la cage (85) de manière à maintenir le flasque (4) du moyeu (1) dedans, et des ressorts hélicoïdaux (35) traversant les trous de ressort (6) disposés dans le flasque (4) du moyeu (1), qui est caractérisé en ce que :
la cage (85) a une surface périphérique sur laquelle sont disposées des dents (87) pour venir en prise avec une chaîne de transmission, les ressorts hélicoïdaux (35) sont du type bombé et sont comprimés entre le couvercle annulaire (84) et la cage (85) de manière à se cintrer lors de la transmission d'un moment de torsion et amener leurs spirales adjacentes en contact les unes avec les autres, avec la portion de plus grand diamètre (36) des ressorts hélicoïdaux bombés (35) ajustée à frottement dur dans les trous de ressort (6) dans le premier moyeu (1) et leurs portions de plus petit diamètre (37) ajustées à frottement dur sur des broches (31) supportées entre le couvercle annulaire (84) et la cage (85).
